# EUROPEAN PATENT SPECIFICATION

(11) **EP 3 878 918 B1**
(45) Date of publication and mention of the grant of the patent: **06.03.2024**
(21) Application number: 19883166.1
(22) Date of filing: 15.01.2019
(51) Int. Cl.: C09J 123/26, B32B 15/085, C09J 11/08, C09J 151/06, B32B 7/12, B32B 15/18, B32B 15/20, B32B 27/32, H01M 50/119, H01M 50/121, H01M 50/124

(54) **POLYOLEFIN-BASED ADHESIVE COMPOSITION**
POLYOLEFINBASIERTE HAFTZUSAMMENSETZUNG
COMPOSITION ADHÉSIVE À BASE DE POLYOLÉFINES

(30) Priority: 08.11.2018 JP 2018210518
(43) Date of publication of application: 15.09.2021
(73) Proprietor: TOYOBO MC Corporation, Osaka-shi, Osaka 5300001 (JP)
(72) Inventor: NAKAJIMA, Momoko, Takasago-shi, Hyogo 676-0082 (JP); SAKATA, Hideyuki, Takasago-shi, Hyogo 676-0082 (JP); KASHIHARA, Kenji, Takasago-shi, Hyogo 676-0082 (JP)
(74) Representative: Vossius & Partner Patentanwälte Rechtsanwälte mbB
(86) International application number: PCT/JP2019/000919
(87) International publication number: WO 2020/095461

(56) References cited:
- EP-A1- 3 156 469
- WO-A1-2016/042837
- WO-A1-2017/006681
- WO-A1-2017/030024
- WO-A1-2018/030050
- WO-A1-2018/030086
- JP-A- 2005 029 732

## Description

### Technical Field

The present invention relates to an adhesive composition with excellent re-solubility, excellent adhesion to polyolefin resin substrates and metal substrates, and excellent chemical resistance. More specifically, the present invention relates to an adhesive composition comprising an acid-modified polyolefin, a curing agent, and an organic solvent. In particular, the present invention relates to an adhesive composition for lithium-ion batteries (abbreviated below as "LiBs"), a laminate of a polyolefin resin and a metal substrate bonded with the adhesive composition and a packaging material for a lithium-ion battery comprising the laminate comprising the adhesive composition.

### Background Art

In recent years, LiBs, which can be made ultra-thin and small, have been actively developed as batteries used in personal computers, mobile devices such as mobile phones, video cameras, and satellites. As a packaging material for such LiBs, a laminate composed of, for example, a substrate layer, a barrier layer, and a sealant layer has been used; this is because it has the advantage that, unlike conventionally used metal cans, it is lightweight, and the shape of the batteries can be freely selected.

As content of the battery, an LiB includes a positive electrode material and a negative electrode material, as well as an electrolyte solution in which a lithium salt is dissolved in an aprotic solvent (e.g., propylene carbonate, ethylene carbonate, dimethyl carbonate, diethyl carbonate, or ethyl methyl carbonate) or an electrolyte layer of a polymer gel impregnated with the electrolyte solution. When such a highly penetrating solvent passes through the sealant layer, the lamination strength between the barrier layer and the sealant layer is reduced, causing delamination, and finally resulting in leakage of the electrolyte solution. Moreover, although LiPF₆, LiBF₄, and like materials are used as lithium salts (electrolytes of the batteries), hydrolysis reaction of such a salt with moisture produces hydrofluoric acid, which corrodes the barrier layer, reducing the lamination strength. The battery packaging materials are thus required to have resistance to the electrolyte.

Furthermore, LiBs must have resistance to harsher environments based on the assumption that they will be used in various environments. For example, when used in mobile devices, LiBs are required to have liquid leakage resistance in environments at a temperature as high as 60 to 70°C, such as in vehicles. LiBs are also required to have water resistance in order to prevent water from entering them, based on the assumption that they will be used in mobile phones and accidentally dropped into water.

Under such circumstances, various packaging materials for lithium-ion batteries with improved electrolyte solution resistance have been proposed (for example, see Patent Literature (PTL) 1, 2, and 3).

### Citation List

### Patent Literature

PTL 1: JP2001-243928A
PTL 2: JP2004-42477A
PTL 3: JP2009-238475A
PTL 4: EP3156469A1

### Summary of Invention

### Technical Problem

However, the proposed packaging materials for lithium-ion batteries are still insufficient in terms of electrolyte solution resistance and moldability. Even materials with greatly improved electrolyte solution resistance and moldability have problems.

Specifically, for example, it is difficult to achieve both the pot life properties and the electrolyte solution resistance of an adhesive after a curing agent is blended (PTL 1). Further, since bonding is performed by extrusion lamination, the stand for lamination is restricted, and the polyolefin substrate is affected by thermal shrinkage due to bonding at a high temperature (PTL 2). Furthermore, since the polyolefin main agent is a water-based agent, drying takes a long time, which restricts the production conditions (PTL 3).

PTL 4 discloses an adhesive composition comprising:
a modified polyolefin (A), a glycidyl amine-type epoxy resin (Bl), a glycidyl ether-type epoxy resin (B2), and an organic solvent (C).

Additionally, in the production process of laminated films, an adhesive composition remaining on a gravure roll without being transferred to the film becomes solid adhering matter when dried on the roll. If the adhering matter accumulates, the gravure roll can become clogged, which may decrease the yield. To prevent adhering matter from drying and causing clogging, the re-solubility of the adhesive composition, i.e., the property that the adhesive composition dissolves in the adhesive composition again, before becoming solid adhering matter, is desired. An adhesive composition that has excellent re-solubility can produce an adhesive layer composed of the adhesive composition without restricting the production conditions.

An object of the present invention is to provide an adhesive composition with excellent re-solubility, excellent adhesion, and excellent chemical resistance (electrolyte solution resistance). Another object of the present invention is to provide a packaging material for lithium-ion batteries, the packaging material comprising an adhesive layer of the adhesive composition, as well as a battery that uses the packaging material.

### Solution to Problem

The present inventors conducted extensive research to achieve the above objects, and found that selecting appropriate solvent types and appropriate solvent compositions is effective. Thus, the present inventors have proposed the following invention.

An adhesive composition comprising an acid-modified polyolefin (A), a curing agent (B), and an organic solvent (C), wherein the total amount of adhering matter of the acid-modified polyolefin (A), the curing agent (B), and a reaction product of the acid-modified polyolefin (A) and the curing agent (B) after a re-dissolution test is 200 g/m² or less. The organic solvent (C) comprises an organic solvent (C3), and comprises two or more organic solvents selected from the group consisting of an organic solvent (C1), an organic solvent (C2), and an organic solvent (C4).

The organic solvent (C1) is at least one organic solvent selected from the group consisting of aliphatic hydrocarbons and alicyclic hydrocarbons, and having a boiling point of lower than 110°C. The organic solvent (C2) being at least one organic solvent selected from the group consisting of alcohol-based solvents, ketone-based solvents, ester-based solvents, and glycol ether-based solvents, and having a boiling point of lower than 110°C.

The organic solvent (C3) is at least one organic solvent selected from the group consisting of aliphatic hydrocarbons and alicyclic hydrocarbons, and having a boiling point of 110°C or higher.

i The organic solvent (C4) is at least one organic solvent selected from the group consisting of alcohol-based solvents, ketone-based solvents, ester-based solvents, and glycol ether-based solvents, and having a boiling point of 110°C or higher.

When the organic solvent (C) is a combination (i) of (C3), (C1), and (C2), and when the content of the organic solvent (C3) is set to 100 parts by mass, the content of (C1) is 20 parts by mass or more and 260 parts by mass or less, and the content of (C2) is 5 parts by mass or more and 300 parts by mass or less.

When the organic solvent (C) is a combination (ii) of (C3), (C1), and (C4), and when the content of the organic solvent (C3) is set to 100 parts by mass, the content of (C1) is 20 parts by mass or more and 260 parts by mass or less, and the content of (C4) is 5 parts by mass or more and 300 parts by mass or less.

When the organic solvent (C) is a combination (iii) of (C3), (C2), and (C4), and when the content of the organic solvent (C3) is set to 100 parts by mass, the content of (C2) is 5 parts by mass or more and 300 parts by mass or less, and the content of (C4) is 5 parts by mass or more and 300 parts by mass or less.

When the organic solvent (C) is a combination (iv) of (C3), (C1), (C2), and (C4), and when the content of the organic solvent (C3) is set to 100 parts by mass, the content of (C1) is 20 parts by mass or more and 2000 parts by mass or less, the content of (C2) is 2 parts by mass or more and 1000 parts by mass or less, and the content of (C4) is 1 parts by mass or more and 300 parts by mass or less.

The adhesive composition according to the above, wherein the curing agent (B) is an epoxy resin or an isocyanate resin.

The adhesive composition according to any one of the above, comprising 0.5 to 40 parts by mass of the curing agent (B) and 80 to 2000 parts by mass of the organic solvent (C), based on 100 parts by mass of the acid-modified polyolefin (A).

Use of the adhesive composition according to any one of the above for bonding between a polyolefin resin substrate and a metal substrate.

A laminate of a polyolefin resin substrate and a metal substrate bonded with the adhesive composition of any one of the above.

A packaging material for a lithium-ion battery, comprising the laminate of the above as a constituent member.

### Advantageous Effects of Invention

The adhesive composition of the present invention comprises an acid-modified polyolefin, a curing agent, and an organic solvent, and is capable of performing coating without allowing dry matter of the adhesive composition to accumulate on a gravure roll during the production of laminated films. Furthermore, the adhesive composition of the present invention is capable of achieving excellent chemical resistance and excellent adhesion to a polyolefin resin substrate and a metal substrate even when bonding is performed at a temperature as low as 120°C or lower, at which a polyolefin substrate is less affected by thermal shrinkage, and even when aging is performed at a temperature as low as 40°C or lower.

According to the present invention, curing is sufficiently performed by an aging step after bonding of a substrate, and excellent adhesion and excellent chemical resistance are achieved while maintaining excellent re-solubility.

### Description of Embodiments

Embodiments of the present invention are described in detail below.

### Acid-modified Polyolefin (A)

The acid-modified polyolefin (A) for use in the present invention is not limited, and is preferably one obtained by grafting at least one of α,β-unsaturated carboxylic acid and acid anhydride thereof with at least one of polyethylene, polypropylene, and a propylene-α-olefin copolymer.

The propylene-α-olefin copolymer mainly comprises propylene that is copolymerized with an α-olefin. Examples of α-olefins include ethylene, 1-butene, 1-heptene, 1-octene, 4-methyl-1-pentene, vinyl acetate, and the like. These can be used singly, or in a combination of two or more. Among these α-olefins, ethylene and 1-butene are preferable. The ratio of the propylene component and the α-olefin component in the propylene-α-olefin copolymer is not limited. The propylene component is preferably 50 mol% or more, and more preferably 70 mol% or more.

Examples of the at least one of α,β-unsaturated carboxylic acid and acid anhydride thereof include maleic acid, itaconic acid, citraconic acid, and acid anhydrides thereof. Among these, the acid anhydrides are preferable, and maleic anhydride is more preferable. Specific examples include maleic anhydride-modified polypropylenes, maleic anhydride-modified propylene-ethylene copolymers, maleic anhydride-modified propylene-butene copolymers, maleic anhydride-modified propylene-ethylene-butene copolymers, and the like. These acid-modified polyolefins can be used singly, or in a combination of two or more.

The acid-modified polyolefin (A) preferably has an acid value of 2 to 50 mgKOH/g-resin, more preferably 3 to 45 mgKOH/g-resin, even more preferably 5 to 40 mgKOH/g-resin, and particularly preferably 7 to 35 mgKOH/g-resin, in terms of electrolyte solution resistance and adhesion to a polyolefin resin substrate and a metal substrate. If the acid value is less than the above, the compatibility with a curing agent may be poor. This may decrease the crosslinking density and reduce the adhesion strength and the chemical resistance (electrolyte solution resistance). If the acid value exceeds the above, the molecular weight may be low, and the cohesive force may be weak, resulting in decreased adhesion strength and decreased chemical resistance (electrolyte solution resistance). Further, the production efficiency is also reduced. Thus, an acid value exceeding the above value is unfavorable.

The acid values of the acid-modified polyolefin (A) can be adjusted by the amounts of α,β-unsaturated carboxylic acid, acid anhydride of α,β-unsaturated carboxylic acid, and radical generator used.

The weight average molecular weight (Mw) of the acid-modified polyolefin (A) is preferably 10,000 to 200,000, more preferably 20,000 to 180,000, even more preferably 30,000 to 160,000, particularly preferably 40,000 to 140,000, and most preferably 50,000 to 110,000. If the weight average molecular weight is lower than the above, the cohesive force may be weak, resulting in poor adhesion. If the weight average molecular weight exceeds the above value, the fluidity may be low, and operability during bonding may thus be a problem. A weight average molecular weight within the above range is preferable for effectively using a curing reaction with a curing agent.

The acid-modified polyolefin (A) is preferably in a crystalline form. An acid-modified polyolefin in a crystalline form is advantageous because stronger cohesive force, superior adhesion, and superior chemical resistance are achieved, as compared with that in an amorphous form.

When in a crystalline form, the acid-modified polyolefin (A) shows a clear melting peak in the process of temperature increase from -100°C to 250°C at 20°C/min as measured with a differential scanning calorimeter (DSC).

The melting point (Tm) of the acid-modified polyolefin (A) is preferably 50 to 120°C, more preferably 60 to 100°C, and most preferably 70 to 90°C. If the melting point is less than the above value, the cohesive force derived from crystals may be weak, resulting in poor adhesion and poor chemical resistance. If the melting point is more than the above value, the solution stability and the fluidity may be low, and operability during bonding may thus be a problem.

The heat of fusion (ΔH) of the acid-modified polyolefin (A) is preferably 1 to 60 J/g, more preferably 3 to 50 J/g, and most preferably 5 to 40 J/g. If the heat of fusion is less than the above value, the cohesive force derived from crystals may be weak, resulting in poor adhesion and poor chemical resistance. If the heat of fusion is more than the above value, the solution stability and the fluidity may be low, and operability during bonding may thus be a problem.

The method for producing the acid-modified polyolefin (A) is not particularly limited. Examples of the method include a radical grafting reaction in which a radical species is formed in a polymer serving as a main chain, and unsaturated carboxylic acid and acid anhydride are graft-polymerized using the radical species as a polymerization starting point; and the like.

The radical generator is not particularly limited, and is preferably an organic peroxide. Examples of organic peroxides include, but are not limited to, peroxides such as di-tert-butylperoxy phthalate, tert-butyl hydroperoxide, dicumyl peroxide, benzoyl peroxide, tert-butylperoxy benzoate, tert-butyl peroxy-2-ethylhexanoate, tert-butyl peroxy pivalate, methyl ethyl ketone peroxide, di-tert-butyl peroxide, and lauroyl peroxide; and azonitriles, such as azobisisobutyronitrile and azobisisopropionitrile; and the like.

### Curing Agent (B)

The curing agent (B) for use in the present invention is not particularly limited, and is preferably an epoxy curing agent or a multifunctional polyisocyanate curing agent.

The epoxy curing agent for use in the present invention is not particularly limited, and epoxy resins and compounds derived from these can be preferably used. Specific examples include glycidyl amine-type epoxy resins; glycidyl ether-type epoxy resins; glycidyl esters, such as hexahydrophthalic acid glycidyl ester and dimer acid glycidyl ester; alicyclic or aliphatic epoxides, such as 3,4-epoxycyclohexylmethylcarboxylate, epoxidized polybutadiene, and epoxidized soybean oil; and the like. These can be used singly, or in a combination of two or more.

Specific examples of glycidyl amine-type epoxy resins for use in the present invention include, but are not limited to, glycidyl amine-based resins, such as tetraglycidyl diaminodiphenylmethane, triglycidyl para-aminophenol, tetraglycidyl bis-aminomethyl cyclohexanone, and N,N,N',N'-tetraglycidyl-m-xylylenediamine. Among these, N,N,N',N'-tetraglycidyl-m-xylylenediamine is preferable. These glycidyl amine-type epoxy resins can be used singly, or in a combination of two or more.

Specific examples of glycidyl ether-type epoxy resins include, but are not limited to, phenol novolac-type epoxy resins and cresol novolac-type epoxy resins. They are preferable in terms of adhesion to a metal substrate and chemical resistance. These glycidyl ether-type epoxy resins can be used singly, or in a combination of two or more.

In terms of adhesion to a metal substrate and chemical resistance, a glycidyl amine-type epoxy resin and a glycidyl ether-type epoxy resin are preferably used in combination as the epoxy curing agent for use in the present invention. The mass ratio of the glycidyl amine-type epoxy resin to the glycidyl ether-type epoxy resin is preferably 1 or more to 30 or less/99 or less to 70 or more, more preferably 5 or more to 20 or less/95 or less to 80 or more, and even more preferably 8 or more to 15 or less/92 or less to 75 or less.

The multifunctional polyisocyanate curing agent for use in the present invention is not particularly limited, and diisocyanates, triisocyanates, and compounds derived from these can be preferably used. Examples include diisocyanates, such as 2,4-tolylenediisocyanate, 2,6-tolylenediisocyanate, xylylene diisocyanate, diphenylmethane diisocyanate, isophorone diisocyanate, 1,5-naphthalene diisocyanate, hexamethylene diisocyanate, bis(4-isocyanatecyclohexyl)methane, and hydrogenated diphenylmethane diisocyanate; compounds derived from the diisocyanates, such as isocyanurates, adducts, biurets, uretdiones, and allophanates of the diisocyanates, and prepolymers having isocyanate residues (low polymers obtained from a diisocyanate and a polyol); triglycidyl isocyanurate; composites thereof; and the like. These can be used singly, or in combination of two or more.

Among these, isocyanurates of the diisocyanate compounds are preferable as the multifunctional polyisocyanate curing agent for use in the present invention in terms of excellent electrolyte solution resistance.

Examples of the curing agent (B) for use in the present invention also include carbodiimide compounds, oxazoline compounds, coupling agents, and the like in addition to the epoxy curing agents and multifunctional polyisocyanate curing agents. Examples of carbodiimide compounds include monocarbodiimide compounds, such as dimethylcarbodiimide, diisopropylcarbodiimide, dicyclohexylcarbodiimide, t-butylisopropylcarbodiimide, diphenylcarbodiimide, and di-β-naphthylcarbodiimide; polycarbodiimide compounds that can be produced by subjecting an organic diisocyanate, such as an aliphatic diisocyanate, an aromatic diisocyanate, or alicyclic diisocyanate, to a decarboxylation condensation reaction without a solvent or in an inert solvent in the presence of a condensation catalyst; and the like. Examples of oxazoline compounds include monooxazoline compounds, such as 2-oxazoline, 2-methyl-2-oxazoline, 2-phenyl-2-oxazoline, 2,5-dimethyl-2-oxazoline, and 2,4-diphenyl-2-oxazoline; dioxazoline compounds, such as 2,2'-(1,3-phenylene)-bis(2-oxazoline), 2,2'-(1,2-ethylene)-bis(2-oxazoline), 2,2'-(1,4-butylene)-bis(2-oxazoline), and 2,2'-(1,4-phenylene)-bis(2-oxazoline); and the like. Examples of coupling agents include silane coupling agents, titanate coupling agents, and the like.

The content of the curing agent (B) for use in the present invention is preferably 0.5 to 40 parts by mass, more preferably 1 to 35 parts by mass, even more preferably 2 to 30 parts by mass, and particularly preferably 3 to 25 parts by mass, based on 100 parts by mass of the acid-modified polyolefin (A). If the content is less than the above value, sufficient curing effects may not be obtained, resulting in poor adhesion and poor chemical resistance. If the content is more than the above value, the pot life properties and the adhesion may be reduced, and the followability may also be reduced, causing pinholes during molding. Furthermore, an amount of the curing agent (B) exceeding the above range is unfavorable from the viewpoint of cost.

### Organic Solvent (C)

The organic solvent (C) for use in the present invention is not particularly limited as long as it dissolves or disperses the acid-modified polyolefin (A) and the curing agent (B). The organic solvent (C) comprises an organic solvent (C3) and comprises two or more solvents selected from the group consisting of an organic solvent (C1), an organic solvent (C2), and an organic solvent (C4). It is preferable that these solvents are uniformly mixed.

The organic solvent (C1) is at least one organic solvent selected from the group consisting of aliphatic hydrocarbons and alicyclic hydrocarbons, and has a boiling point of lower than 110°C. Specific examples include aliphatic hydrocarbons, such as hexane (boiling point: 69°C; below, the value in parentheses is the boiling point) and heptane (98°C.); alicyclic hydrocarbons, such as cyclohexane (80°C), cyclohexene (83°C), and methylcyclohexane (101°C); and the like. These can be used singly, or in a combination of two or more. The organic solvent (C1) is particularly preferably an alicyclic hydrocarbon. Of these, cyclohexane and methylcyclohexane are particularly preferred, and cyclohexane is more particularly preferred.

The organic solvent (C2) is at least one organic solvent selected from the group consisting of alcohol-based solvents, ketone-based solvents, and ester-based solvents, and has a boiling point of lower than 110°C. Specific examples include alcohol-based solvents, such as methanol (60°C), ethanol (78°C), and isopropyl alcohol (82°C); ketone-based solvents, such as acetone (56°C), methyl ethyl ketone (80°C), 3-pentanone (101°C), and propyl acetate (102°C); and ester-based solvents, such as methyl acetate (58°C), ethyl acetate (77°C), methyl propionate (79°C), and butyl formate (107°C). These can be used singly, or in a combination of two or more. The organic solvent (C2) preferably has a melting point of 80°C or higher, and is particularly preferably a ketone-based solvent, and more particularly preferably methyl ethyl ketone or propyl acetate.

The organic solvent (C3) is at least one organic solvent selected from the group consisting of aliphatic hydrocarbons and alicyclic hydrocarbons, and has a boiling point of 110°C or higher, preferably 130°C or higher, further preferably 140°C or higher, particularly preferably 150°C or higher, and most preferably 160°C or higher. Specific examples include aliphatic hydrocarbons, such as octane (125°C), nonane (151°C), decane (174°C), undecane (196°C), and dodecane (214-216°C); alicyclic hydrocarbons, such as dimethylcyclohexane (119°C) and ethylcyclohexane (131°C); paraffin-based solvents; isoparaffin-based solvents, such as isododecane (170°C) and Shellsol TG (170-181°C); and the like. These can be used singly, or in a combination of two or more, for the organic solvent (C3). The organic solvent (C3) is preferably a paraffin solvent, and particularly preferably Shellsol MC311 (167-180°C). The upper limit of the boiling point is preferably 220°C or lower, more preferably 210°C or lower, even more preferably 200°C or lower, particularly preferably 190°C or lower, and most preferably 185°C or lower. Even when the boiling point exceeds the above range, excellent re-solubility is achieved, but the drying properties at the time of coating may be poor, which may result in a decrease in adhesion.

The organic solvent (C4) is at least one organic solvent selected from the group consisting of alcohol-based solvents, ketone-based solvents, ester-based solvents, and glycol ether-based solvents, and has a boiling point of 110°C or higher. Specific examples include alcohol-based solvents, such as 1-butanol (118°C), 1-pentanol (138°C), 1-hexanol (157°C), and 1,3-propanediol (211-217°C); ketone-based solvents, such as methyl isobutyl ketone (116°C), 2-hexanone (127°C), cyclohexanone (155°C), isophorone (215°C), and acetophenone (202°C); ester-based solvents, such as butyl acetate (125°C) and n-amyl acetate (150°C), cellosolves, such as methyl cellosolve (125°C) and ethyl cellosolve (136°C); glycol ether-based solvents, such as ethylene glycol mono-tert-butyl ether (152°C) and diethylene glycol mono-n-butyl ether (231°C); and the like. These can be used singly, or in a combination of two or more. Butyl acetate, n-amyl acetate, and cyclohexanone are particularly preferable, and cyclohexanone is more particularly preferable. The upper limit of the boiling point is preferably 250°C or lower, and more preferably 160°C or lower. Even when the boiling point exceeds the upper limit, excellent re-solubility is achieved, but the drying properties at the time of coating may be poor, which may result in a decrease in adhesion.

The organic solvent (C) preferably does not contain aromatic hydrocarbons. The content thereof is preferably 20 mass% or less, more preferably 10 mass% or less, even more preferably 5 mass% or less, and particularly preferably 1 mass% or less, based on 100 mass% of the organic solvent (C). The content can also be 0 mass%.

The content of the organic solvent (C) is preferably 80 to 2000 parts by mass, more preferably 90 to 1600 parts by mass, even more preferably 100 to 1200 parts by mass, and particularly preferably 110 to 800 parts by mass, based on 100 parts by mass of the acid-modified polyolefin (A). If the content is less than the above range, the solution state and the pot life properties may be poor. A content exceeding the above range may be disadvantageous in terms of productivity, production costs, and transportation costs of the laminate and the packaging material for LiBs comprising the laminate.

In terms of the solution state and the pot life properties of the adhesive composition, the organic solvent (C)
comprises the organic solvent (C3), and also comprises a mixture of two or more organic solvents selected from the group consisting of the organic solvent (C1), the organic solvent (C2), and the organic solvent (C4). The mixing ratio of the organic solvents (C1), (C2), (C3), and (C4) when used is preferably (the solvent (C1) + the solvent (C3))/(the solvent (C2) + the solvent (C4)) = 50 to 97/50 to 3 (mass ratio), more preferably 50 to 95/50 to 5 (mass ratio), even more preferably 50 to 90/50 to 10 (mass ratio), and particularly preferably 50 to 70/50 to 30 (mass ratio). If the ratio is outside the above range, the solution state and the pot life properties of the adhesive composition may be poor. Furthermore, in terms of re-solubility,
   when the organic solvent (C) for use is a combination (i) of (C3), (C1), and (C2), and when the content of the organic solvent (C3) is set to 100 parts by mass, the content of (C1) is 20 parts by mass or more and 260 parts by mass or less, and the content of (C2) is 5 parts by mass or more and 300 parts by mass or less, and it is preferable that the content of (C1) is 40 parts by mass or more and 160 parts by mass or less, and the content of (C2) is 20 parts by mass or more and 200 parts by mass or less. When the organic solvent (C) is a combination (ii) of (C3), (C1), and (C4), and when the content of the organic solvent (C3) is set to 100 parts by mass, the content of (C1) is 20 parts by mass or more and 260 parts by mass or less, and the content of (C4) is 5 parts by mass or more and 300 parts by mass or less, and it is preferable that the content of (C1) is 40 parts by mass or more and 160 parts by mass or less, and the content of (C4) is 5 parts by mass or more and 200 parts by mass or less. When the organic solvent (C) is a combination (iii) of (C3), (C2), and (C4), and when the content of the organic solvent (C3) is set to 100 parts by mass,
the content of (C2) is 5 parts by mass or more and 300 parts by mass or less, and the content of (C4) is 5 parts by mass or more and 300 parts by mass or less, and it is preferable that the content of (C2) is 5 parts by mass or more and 200 parts by mass or less, and the content of (C4) be 5 parts by mass or more and 200 parts by mass or less. When the organic solvent (C) is a combination (iv) of (C3), (C1), (C2), and (C4), and when the content of the organic solvent (C3) is set to 100 parts by mass, the content of (C1) is 20 parts by mass or more and 2000 parts by mass or less, the content of (C2) is 2 parts by mass or more and 1000 parts by mass or less, and the content of (C4) is 1 parts by mass or more and 300 parts by mass or less; it is preferable that the content of (C1) is 200 parts by mass or more and 1200 parts by mass or less, the content of (C2) is 5 parts by mass or more and 600 parts by mass or less, and the content of (C4) is 5 parts by mass or more and 200 parts by mass or less; it is more preferable that the content of (C1) is 200 parts by mass or more and 450 parts by mass or less, the content of (C2) is 90 parts by mass or more and 160 parts by mass or less, and the content of (C4) is 50 parts by mass or more and 130 parts by mass or less; and it is particularly preferable that the content of (C1) is 250 parts by mass or more and 350 parts by mass or less, the content of (C2) is 100 parts by mass or more and 145 parts by mass or less, and the content of (C4) is 70 parts by mass or more and 120 parts by mass or less.

Further, it is particularly preferable that the organic solvent (C1) be an alicyclic hydrocarbon, the organic solvent (C3) be an alicyclic hydrocarbon or a paraffin-based solvent, and the organic solvent (C2) and the organic solvent (C4) be ketone-based solvents.

### Adhesive Composition

The adhesive composition of the present invention is a mixture of the acid-modified polyolefin (A), the curing agent (B), and the organic solvent (C). From the viewpoint of re-solubility, the acid-modified polyolefin (A) and the curing agent (B) are preferably dissolved in the organic solvent (C).

In terms of the adhesive composition, the total amount of adhering matter of the acid-modified polyolefin (A), the curing agent (B), and a reaction product of the acid-modified polyolefin (A) and the curing agent (B) (also simply referred to below as "the adhering matter") after a re-dissolution test must be 200 g/m² or less, preferably 100 g/m² or less, and more preferably 55 g/m² or less. If the amount exceeds 200 g/m², in the production process of laminated films, the adhesive composition remaining on the gravure roll without being transferred to the film may dry and accumulate as solid adhering matter, which can cause clogging of the gravure roll, resulting in a decrease in the yield. The lower limit is not limited, and is preferably 0.1 g/m² or more, and more preferably 5 g/m² or more. Industrially, it is sufficient if the lower limit is 0.1 g/m² or more. The re-dissolution test can be used to evaluate the re-solubility of an adhesive composition. Specifically, in the re-dissolution test, a tin test plate substrate is immersed in an adhesive composition for 2 seconds with 4.5 cm from one end of the substrate under the liquid surface, and then the entire substrate is withdrawn from the liquid surface at 50 cm/sec, and is allowed to stand in the atmosphere at a temperature of 25°C for 15 seconds. A series of these operations is regarded as one cycle, and 30 cycles are carried out. The amount of adhering matter after the re-dissolution test refers to the amount of adhering matter with respect to the immersion area of the substrate dried in the atmosphere at a temperature of 25°C for 30 minutes after the 30 cycles.

The adhesive composition of the present invention can comprise various tackifiers, thermoplastic elastomers, and plasticizers in addition to the acid-modified polyolefin (A), the curing agent (B), and the organic solvent (C) as long as the performance of the present invention is not impaired. Examples of tackifiers include, but are not limited to, polyterpene-based resin, rosin-based resin, aliphatic petroleum resin, alicyclic petroleum resin, copolymer petroleum resin, hydrogenated petroleum resin, and the like. Examples of thermoplastic elastomers include styrene-based elastomers, such as styrene-ethylene-butylene-styrene copolymer resin and styrene-ethylene-propylene-styrene; olefin-based elastomers, such as ethylene-propylene copolymer resin, ethylene-butene copolymer resin, ethylene-vinyl acetate copolymer resin, and ethylene-ethyl acrylate copolymer resin; and the like. The plasticizer is preferably liquid rubber such as polyisoprene or polybutene, process oil, or the like. These tackifiers, thermoplastic elastomers, and plasticizers can be used singly, or in a combination of two or more.

The adhesive composition of the present invention may be used by incorporating a curing accelerator in addition to the acid-modified polyolefin (A), the curing agent (B) and the organic solvent (C) as long as the performance of the present invention is not impaired. Examples of curing accelerators include, but are not limited to, carboxylic acid metal salts, tertiary amines, quaternary ammonium salts, organic peroxides, hydrazine compounds, metal chelate compounds, phosphorus-containing compounds, basic vulcanizing agents, and the like. Examples of the carboxylic acid metal salts include metal salts of carboxylic acids having 1 to 30 carbon atoms. Examples of carboxylic acids constituting the carboxylic acid metal salts include aliphatic carboxylic acids, such as acetic acid, butyric acid, octanoic acid, decanoic acid, lauric acid, myristic acid, palmitic acid, stearic acid, oleic acid, behenic acid, octenoic acid, erucic acid, elaidic acid, adipic acid, malonic acid, succinic acid, glutaric acid, citric acid, tartaric acid, malic acid, and diglycolic acid; aromatic carboxylic acids, such as benzoic acid, chlorobenzoic acid, anisic acid, aminobenzoic acid, phthalic acid, terephthalic acid, naphthoic acid, naphthalenedicarboxylic acid, and benzenetricarboxylic acid; naphthenic acid; acetonic acid; and the like. Examples of metals constituting the carboxylic acid metal salts include Li, Na, K, Mg, Ca, Zn, Al, Cu, Pb, Co, Fe, Mn, Sn, Ti, and the like. Specific examples of the carboxylic acid metal salts includes lithium acetate, sodium acetate, magnesium acetate, aluminum acetate, potassium butyrate, calcium butyrate, zinc butyrate, sodium octanoate, calcium octanoate, potassium decanoate, magnesium decanoate, zinc decanoate, lithium laurate, sodium laurate, calcium laurate, aluminum laurate, potassium myristate, sodium myristate, aluminum myristate, sodium palmitate, zinc palmitate, magnesium palmitate, sodium stearate, potassium stearate, calcium stearate, zinc stearate, sodium oleate, sodium behenate, sodium benzoate, zinc benzoate, sodium phthalate, aluminum phthalate, magnesium terephthalate, calcium naphthalenedicarboxylate, dibutyltin laurate, tributyltin laurate, dioctyltin laurate, tributyltin acetate, dibutyltin diacetate, dioctyltin diacetate, dibutyltin 2-ethylhexanoate, tetrabutyl titanate, tetraisobutyl titanate, tetra 2-ethylhexyl titanate, cobalt naphthenate, copper naphthenate, magnesium naphthenate, cobalt acetoacetate, and the like. Among these, preferable examples include lithium laurate, sodium laurate, calcium laurate, aluminum laurate, potassium myristate, sodium myristate, aluminum myristate, sodium palmitate, zinc palmitate, magnesium palmitate, sodium stearate, potassium stearate, calcium stearate, zinc stearate, and sodium oleate. The metal salt of carboxylic acid may be a polymer having a carboxylic acid metal salt structure. Examples of such polymers include those having a structure obtained by copolymerizing ethylene and a salt of metal of group IA, group IIA, group IIB, and group IIIB (e.g., Li, Na, K, Mg, Ca, Zn, Al) of radically polymerizable carboxylic acids; those having a structure obtained by multi-component copolymerizing ethylene, a metal salt of a radically polymerizable carboxylic acid, and another radically polymerizable carboxylic acid and/or a derivative thereof; and the like. Examples of the tertiary amines include dimethylaniline, triethanolamine, dimethyl-p-toluidine, and the like. Examples of the hydrazine compounds include 1-acetyl-2-phenylhydrazine and the like. Examples of the metal chelate compounds include vanadium acetylacetonate and the like. Examples of the phosphorus-containing compounds include dimethylphosphine, triphenylphosphine, and the like.

The adhesive composition of the present invention may be used by incorporating various additives in addition to the acid-modified polyolefin (A), the curing agent (B), and the organic solvent (C) as long as the performance of the present invention is not impaired. The additives are not particularly limited and may be preferably a flame retardant, a pigment, and antiblocking agent, or the like.

### Laminate

The laminate of the present invention is one in which a polyolefin resin substrate and a metal substrate are laminated using the adhesive composition according to the present invention.

The lamination may be performed using a previously known laminate production technique. Although there is no particular limitation, for example, the adhesive composition may be applied to the surface of a metal substrate using a suitable coating means, such as a roll coater or a bar coater, followed by drying. After drying, a polyolefin resin substrate may be laminate-bonded to the coating surface while the layer of the adhesive composition (adhesive layer) formed on the surface of the metal substrate is in a molten state, to thus obtain a laminate.

The thickness of the adhesive layer formed from the adhesive composition is not particularly limited, and is preferably 0.5 to 10 pm, more preferably 0.8 to 9.5 pm, and even more preferably 1 to 9 pm.

### Polyolefin Resin Substrate

The polyolefin resin substrate may be suitably selected from previously known polyolefin resins. For example, polyethylene, polypropylene, ethylene-propylene copolymers, and the like may be used without limitation. Among these, it is preferable to use a cast polypropylene film (also referred to below as "CPP"). The thickness of the polyolefin resin substrate is not particularly limited, and is preferably 20 to 100 pm, more preferably 25 to 95 pm, and even more preferably 30 to 90 um. The polyolefin resin substrate may contain a pigment and various additives or may be subjected to surface treatment, if necessary.

### Metal Substrate

Examples of the metal substrate include, but are not limited to, various metals, such as aluminum, copper, steel, chromium, zinc, duralumin, and die-cast metals; and alloys thereof. The metal substrate may have any shape, such as a metal foil, a rolled steel plate, a panel, a pipe, a can, or a cap. In general, aluminum foil is preferable in terms of, e.g., processability. The metal substrate is usually used in the form of a sheet having a thickness of 0.01 to 10 mm, and preferably 0.02 to 5 mm, although this varies depending on the purpose of use.

The surface of such a metal substrate may be subjected to surface treatment beforehand, or may be untreated. In either case, comparable effects can be exhibited.

### Examples

Examples are given below to illustrate the present invention in more detail; however, the present invention is not limited to these Examples.

### Production Examples of Acid-Modified Polyolefin (A)

### Production Example 1

100 parts by mass of a propylene-butene copolymer (Tm: 80°C), 233 parts by mass of toluene, 20 parts by mass of maleic anhydride, and 5 parts by mass of di-tert-butyl peroxide were placed in a 1-L autoclave. The mixture was heated to 140°C and then further stirred for 1 hour (referred to here as "reacted" for 1 hour). Thereafter, the resulting reaction mixture was cooled to 100°C, poured into a container containing 717 parts by mass of toluene and 950 parts by mass of methyl ethyl ketone pre-warmed to 40°C with stirring, cooled to 40°C, further stirred for 30 minutes, and further cooled to 25°C to precipitate resin (here, the operation of pouring the reaction mixture into solvents such as methyl ethyl ketone with stirring and cooling the reaction mixture to precipitate resin is referred to as "reprecipitation"). The slurry liquid containing the resin was then centrifuged to separate it into an acid-modified propylene-butene copolymer in which maleic anhydride was graft-polymerized, and (poly)maleic anhydride and low-molecular-weight substances.

Further, the acid-modified propylene-butene copolymer removed by centrifugation was placed in a new container containing 2000 parts by mass of methyl ethyl ketone pre-warmed to 25°C with stirring, followed by continuous stirring for 1 hour. Thereafter, the slurry liquid was centrifuged to further separate it into an acid-modified propylene-butene copolymer, and (poly)maleic anhydride and low-molecular-weight substances. This operation was repeated twice for purification (here, the operation of adding the acid-modified propylene-butene copolymer removed by centrifugation to methyl ethyl ketone with stirring and performing centrifugation again to enhance purification is referred to as "reslurry").

After purification, drying was performed at 70°C under reduced pressure for 5 hours, thereby obtaining a maleic anhydride-modified propylene-butene copolymer (PO-1, acid value: 25 mgKOH/g-resin, weight average molecular weight: 60,000, Tm: 80°C), which is an acid-modified polyolefin.

### Production Example 2

A maleic anhydride-modified propylene-butene copolymer (PO-2, acid value: 25 mgKOH/g-resin, weight average molecular weight: 60,000, Tm: 90°C), which is an acid-modified polyolefin, was obtained in the same manner as in Production Example 1, except that a propylene-butene copolymer (Tm: 90°C) was used in place of the propylene-butene copolymer (Tm: 80°C) used in Production Example 1, and that the reslurry was performed once, and the amount of methyl ethyl ketone used in the reslurry was 1000 parts by mass.

### Production Example 3

A maleic anhydride-modified propylene-butene copolymer (PO-3, acid value: 5 mgKOH/g-resin, weight average molecular weight: 90,000, Tm: 80°C), which is an acid-modified polyolefin, was obtained in the same manner as in Production Example 1, except that the amounts of maleic anhydride and di-tert-butyl peroxide were respectively 3 parts by mass and 1 part by mass, and that the reslurry was performed once, and the amount of methyl ethyl ketone used in the reslurry was 1000 parts by mass.

### Production of Main Agent 1

100 parts by mass of the maleic anhydride-modified propylene-butene copolymer (PO-1) obtained in Production Example 1, 130 parts by mass of cyclohexane, 130 parts by mass of Isopar E, and 140 parts by mass of methyl ethyl ketone were placed in a 500-ml four-necked flask equipped with a water-cooled reflux condenser and a stirrer. The mixture was heated to 80°C with stirring, followed by continuous stirring for 1 hour. The mixture was then cooled to obtain a main agent 1. Tables 1 and 2 show the solution states.

### Production of Main Agents 2 to 25

Main agents 2 to 25 were produced in the same manner as in the method for main agent 1, except that the acid-modified polyolefin and the organic solvent were as shown in Tables 1 and 2. Tables 1 and 2 show the blending amounts and the solution states.

**Table 1**

| | | | | | Main agent 1 | Main agent 2 | Main agent 3 | Main agent 4 | Main agent 5 | Main agent 6 | Main agent 7 | Main agent 8 | Main agent 9 | Main agent 10 | Main agent 11 | Main agent 12 | Main agent 13 |
|---|---|---|---|---|---|---|---|---|---|---|---|---|---|---|---|---|---|
| Acid-modified polyolefin (parts by mass) | | PO-1 | | | 100 | 100 | 100 | 100 | 100 | 100 | 100 | 100 | 100 | 100 | 100 | 100 | 100 |
| | | (acid value: 25 mgKOH/g-resin, Mw: 60,000) (Tm=80°C) | | | | | | | | | | | | | | | |
| | | PO-2 | | | | | | | | | | | | | | | |
| | | (acid value: 25 mgKOH/g-resin, Mw. 60,000) (Tm=90°C) | | | | | | | | | | | | | | | |
| | | PO-3 | | | | | | | | | | | | | | | |
| | | (acid value: 5 mgKOH/g-resin, Mw: 90,000) (Tm=80°C) | | | | | | | | | | | | | | | |
| C1 | Cyclohexane | | 80°C | (parts by mass) | 130 | 130 | 130 | 130 | 130 | 130 | 130 | 130 | 130 | 130 | | | |
| | Methylcyclohexane | | 101°C | (parts by mass) | | | | | | | | | | | 130 | 130 | |
| C3 | Isopar E | isoparaffin-based | 115-123°C | (parts by mass) | 130 | | | | | | | | | | | | |
| | Shellsol MC311 | paraffin-based | 167-180°C | (parts by mass) | | 130 | | | | 130 | 130 | 130 | 130 | 130 | 130 | | |
| | Exxsol D40 | naphthene-based | 166-191°C | (parts by mass) | | | 130 | | | | | | | | | 130 | 130 |
| | Isopar G | isoparaffin-based | 166-177°C | (parts by mass) | | | | 130 | | | | | | | | | |
| | Isopar L | isoparaffin-based | 184-199°C | (parts by mass) | | | | | 130 | | | | | | | | |
| C2 | Methyl ethyl ketone | | 80°C | (parts by mass) | 140 | 140 | 140 | 140 | 140 | | | | | | 140 | | 140 |
| | Propyl acetate | | 102°C | (parts by mass) | | | | | | 140 | | | | | | | |
| C4 | Butyl acetate | | 125°C | (parts by mass) | | | | | | | 140 | | | | | | |
| | n-Amyl acetate | | 150°C | (parts by mass) | | | | | | | | 140 | | | | | |
| | Isoamyl acetate | | 142°C | (parts by mass) | | | | | | | | | 140 | | | | |
| | Cyclohexanone | | 155°C | (parts by mass) | | | | | | | | | | 140 | | 140 | 140 |
| Solution state* | | | | Evaluation | A | A | A | A | A | A | A | A | A | A | A | A | A |

**Table 2**

| | | | | | Main agent 14 | Main agent 15 | Main agent 16 | Main agent 17 | Main agent 18 | Main agent 19 | Main agent 20 | Main agent 21 | Main agent 22 | Main agent 23 | Main agent 24 | Main agent 25 | Main agent 26 |
|---|---|---|---|---|---|---|---|---|---|---|---|---|---|---|---|---|---|
| Acid-modified polyolefin (parts by mass) | | PO-1 | | | 100 | 100 | 100 | 100 | 100 | 50 | 200 | | | 100 | 100 | 100 | 100 |
| | | (acid value: 25 mgKOH/g-resin, Mw: 60,000) (Tm=80°C) | | | | | | | | | | | | | | | |
| | | PO-2 | | | | | | | | | | 100 | | | | | |
| | | (acid value: 25 mgKOH/g-resin, Mw: 60,000) (Tm=90°C) | | | | | | | | | | | | | | | |
| | | PO-3 | | | | | | | | | | | 100 | | | | |
| | | (acid value: 5 mgKOH/g-resin, Mw: 90,000) (Tm=80°C) | | | | | | | | | | | | | | | |
| C1 | Cyclohexane | | 80°C | (parts by mass) | 252 | 140 | 200 | 234 | 156 | 240 | 240 | 200 | 200 | 260 | | 260 | |
| | Methylcyclohexane | | 101°C | (parts by mass) | | | | | | | | | | | | | |
| C3 | Isopar E | isoparaffin-based | 115-123°C | (parts by mass) | | | | | | | | | | | | | |
| | Shellsol MC311 | paraffin-based | 167-180°C | (parts by mass) | 108 | 60 | 60 | 26 | 84 | 80 | 80 | 60 | 60 | | 260 | 140 | |
| | Exxsol D40 | naphthene-based | 166-191°C | (parts by mass) | | | | | | | | | | | | | |
| | Isopar G | isoparaffin-based | 166-177°C | (parts by mass) | | | | | | | | | | | | | |
| | Isopar L | isoparaffin-based | 184-199°C | (parts by mass) | | | | | | | | | | | | | |
| C2 | Methyl ethyl ketone | | 80°C | (parts by mass) | 49 | 140 | 80 | 126 | 104 | 35 | 35 | 80 | 80 | 140 | | | 260 |
| | Propyl acetate | | 102°C | (parts by mass) | | | | | | | | | | | | | |
| C4 | Butyl acetate | | 125°C | (parts by mass) | | | | | | | | | | | | | |
| | n-Amyl acetate | | 150°C | (parts by mass) | | | | | | | | | | | | | 140 |
| | Isoamyl acetate | | 142°C | (parts by mass) | | | | | | | | | | | | | |
| | Cyclohexanone | | 155°C | (parts by mass) | 12 | 60 | 60 | 14 | 56 | 45 | 45 | 60 | 60 | | 140 | | |
| Solution state* | | | | Evaluation | A | A | A | A | A | A | A | A | A | A | A | A | B |

The organic solvents shown in Tables 1 and 2 are as follows.
Isopar E (registered trademark, produced by Exxon Mobil Corporation): an isoparaffin-based solvent, boiling point: 115-123°C
Shellsol MC311 (registered trademark, produced by Shell Chemicals Japan Ltd.): a paraffin-based solvent, boiling point: 167-180°C
Exxsol D40 (registered trademark, produced by Exxon Mobil Corporation): a naphthene-based solvent, boiling point: 166-191°C
Isopar G (registered trademark, produced by Exxon Mobil Corporation): an isoparaffin-based solvent, boiling point: 166-177°C
Isopar L (registered trademark, produced by Exxon Mobil Corporation): an isoparaffin solvent, boiling point: 184-199°C

### Example 1

500 parts by mass of the main agent 1, 25 parts by mass of jER (registered trademark) 152 (produced by Mitsubishi Chemical Corporation) as a curing agent (B), and 3 parts by mass of TETRAD (registered trademark)-X (produced by Mitsubishi Gas Chemical Company, Inc.) were mixed to obtain an adhesive composition. The pot life properties, adhesion, chemical resistance, and re-solubility of this adhesive composition were evaluated. Tables 3 and 4 show the results.

### Examples 2 to 22 and Comparative Examples 1 to 4

Examples 2 to 22 and Comparative Examples 1 to 4 were performed in the same manner as in Example 1, except that the main agents 1 to 25 and the curing agents were used as shown in Tables 3 and 4. Tables 3 and 4 show the blending amounts and the results in terms of the pot life properties, adhesion, chemical resistance, and re-solubility.

The curing agents shown in Tables 3 and 4 are as follows.
Glycidyl ether-type epoxy resin: jER (registered trademark) 152 (produced by Mitsubishi Chemical Corporation)
Glycidyl amine-type epoxy resin: TETRAD (registered trademark)-X (produced by Mitsubishi Gas Chemical Company, Inc.)
Multifunctional polyisocyanate: Desmodur (registered trademark) N3300 (produced by Covestro)

**Table 3**

| | | | | | Ex. 1 | Ex. 2 | Ex 3 | Ex. 4 | Ex. 5 | Ex 6 | Ex7 | Ex. 8 | Ex 9 | Ex 10 | Ex. 11 | Ex. 12 | Ex 13 | Ex 14 |
|---|---|---|---|---|---|---|---|---|---|---|---|---|---|---|---|---|---|---|
| Main agent | | | | | Main agent 1 | Main agent 2 | Main agent 3 | Main agent 4 | Main agent 5 | Main agent 6 | Main agent 7 | Main agent 8 | Main agent 9 | Main agent 10 | Main agent 11 | Main agent 12 | Main agent 13 | Main agent 14 |
| Acid-modified polyolefin (parts by mass) | | PO-1 | | | 100 | 100 | 100 | 100 | 100 | 100 | 100 | 100 | 100 | 100 | 100 | 100 | 100 | 100 |
| | | (acid value: 25 mgKOH/g-resin, Mw 60,000) (Tm=80°C) | | | | | | | | | | | | | | | | |
| | | PO-2 | | | | | | | | | | | | | | | | |
| | | (acid value: 25 mgKOH/g-resin, Mw 60,000) (Tm=90°C) | | | | | | | | | | | | | | | | |
| | | PO-3 | | | | | | | | | | | | | | | | |
| | | (acid value: 5 mgKOH/g-resin, Mw: 90,000) (Tm=80°C) | | | | | | | | | | | | | | | | |
| C1 | Cyclohexane | | 80°C | (parts by mass) | 130 | 130 | 130 | 130 | 130 | 130 | 130 | 130 | 130 | 130 | | | | 252 |
| | Methylcyclohexane | | 101°C | (parts by mass) | | | | | | | | | | | 130 | 130 | | |
| C3 | Isopar E | isoparaffin-based | 115-123°C | (parts by mass) | 130 | | | | | | | | | | | | | |
| | Shellsol MC311 | paraffin-based | 167-180°C | (parts by mass) | | 130 | | | | 130 | 130 | 130 | 130 | 130 | 130 | | | 108 |
| | Exxsol D40 | naphthene-based | 166-191°C | (parts by mass) | | | 130 | | | | | | | | | 130 | 130 | |
| | Isopar G | isoparaffin-based | 166-177°C | (parts by mass) | | | | 130 | | | | | | | | | | |
| | Isopar L | isoparaffin-based | 184-199°C | (parts by mass) | | | | | 130 | | | | | | | | | |
| C2 | Methyl ethyl ketone | | 80°C | (parts by mass) | 140 | 140 | 140 | 140 | 140 | | | | | | 140 | | 140 | 49 |
| | Propyl acetate | | 102°C | (parts by mass) | | | | | | 140 | | | | | | | | |
| C4 | Butyl acetate | | 125°C | (parts by mass) | | | | | | | 140 | | | | | | | |
| | n-Amyl acetate | | 150°C | (parts by mass) | | | | | | | | 140 | | | | | | |
| | Isoamyl acetate | | 142°C | (parts by mass) | | | | | | | | | 140 | | | | | |
| | Cyclohexanone | | 155°C | (parts by mass) | | | | | | | | | | 140 | | 140 | 140 | 12 |
| | Solution state* | | | Evaluation | A | A | A | A | A | A | A | A | A | A | A | A | A | A |
| Curing agent (parts by mass) | | Glycidyl ether-type epoxy resin | | | 25 | 25 | 25 | 25 | 25 | 25 | 25 | 25 | 25 | 25 | 25 | 25 | 25 | 25 |
| | | Glycidyl amine-type epoxy resin | | | 3 | 3 | 3 | 3 | 3 | 3 | 3 | 3 | 3 | 3 | 3 | 3 | 3 | 3 |
| | | Multifunctional polyisocyanate | | | | | | | | | | | | | | | | |
| Fbt life (25°Q | | Solution viscosity at 25°C (mPa·s) | | | 120 | 149 | 135 | 80 | 79 | 99 | 175 | 268 | 304 | 88 | 105 | 76 | 110 | 303 |
| | | Evaluation | | | A | A | A | A | A | A | A | A | B | A | A | A | A | B |
| Adhesion | | Adhesion strength (N/15 mm) | | | 7.7 | 7.6 | 7.8 | 7.9 | 7.6 | 7.7 | 7.4 | 7.4 | 7.3 | 7.1 | 7.5 | 7.3 | 7 | 8.1 |
| | | Evaluation | | | B | B | B | B | B | B | C | C | C | C | B | C | C | A |
| Chemical resistance (electrolyte solution resistance) | | Adhesion strength (N/15 mm) | | | 7.7 | 7.7 | 7.5 | 7.7 | 7.8 | 7.8 | 7.9 | 7.5 | 7.9 | 7.5 | 7.9 | 7.8 | 7.6 | Material fracture |
| | | Evaluation | | | B | B | B | B | B | B | B | B | B | B | B | B | B | A |
| Re-solubility | | Resin adhering amount (g/m²) | | | 98 | 77 | 69 | 74 | 54 | 50 | 44 | 41 | 39 | 37 | 47 | 49 | 45 | 50 |
| | | Evaluation | | | B | B | B | B | A | A | A | A | A | A | A | A | A | A |

**Table 4**

| | | | | | Ex 15 | Ex. 16 | Ex. 17 | Ex 18 | Ex 19 | Ex 20 | Ex 21 | Ex 22 | Ex 23 | Comp. Ex 1 | Comp. Ex 2 | Comp. Ex 3 | Comp. Ex 4 |
|---|---|---|---|---|---|---|---|---|---|---|---|---|---|---|---|---|---|
| Main agent | | | | | Main agent 15 | Main agent 16 | Main agent 16 | Main agent 17 | Main agent 18 | Main agent 19 | Main agent 20 | Main agent 21 | Main agent 22 | Main agent 23 | Main agent 24 | Main agent 25 | Main agent 26 |
| Acid-modified polyolefin (parts by mass) | | PO-1 | | | 100 | 100 | 100 | 100 | 100 | 50 | 200 | | | 100 | 100 | 100 | 100 |
| | | (acid value: 25 mgKOH/g-resin, Mw 60,000) (Tm=80°C) | | | | | | | | | | | | | | | |
| | | | | | | | | | | | | 100 | | | | | |
| | | (PO-2 (acid value: 25 mgKOH/g-resin, Mw: 60,000) (Tm=90°C) | | | | | | | | | | | | | | | |
| | | PO-3 | | | | | | | | | | | 100 | | | | |
| | | (acid value: 5 mgKOH/g-resin, Mw 90,000) (Tm=80°C) | | | | | | | | | | | | | | | |
| C1 | Cyclohexane | | 80°C | (parts by mass) | 140 | 200 | 200 | 234 | 156 | 200 | 200 | 200 | 200 | 260 | | 260 | |
| | Methylcyclohexane | | 101°C | (parts by mass) | | | | | | | | | | | | | |
| C3 | Isopar E | isoparaffin-based | 115-123°C | (parts by mass) | | | | | | | | | | | | | |
| | Shellsol MC311 | paraffin-based | 167-180°C | (parts by mass) | 60 | 60 | 60 | 26 | 84 | 60 | 60 | 60 | 60 | | 260 | 140 | |
| | Exxsol D40 | naphthene-based | 166-191°C | (parts by mass) | | | | | | | | | | | | | |
| | Isopar G | isoparaffin-based | 166-177°C | (parts by mass) | | | | | | | | | | | | | |
| | Isopar L | isoparaffin-based | 184-199°C | (parts by mass) | | | | | | | | | | | | | |
| C2 | Methyl ethyl ketone | | 80°C | (parts by mass) | 140 | 80 | 80 | 126 | 104 | 80 | 80 | 80 | 80 | 140 | | | 260 |
| | Propyl acetate | | 102°C | (parts by mass) | | | | | | | | | | | | | |
| C4 | Butyl acetate | | 125°C | (parts by mass) | | | | | | | | | | | | | |
| | n-Amyl acetate | | 150°C | (parts by mass) | | | | | | | | | | | | | 140 |
| | Isoamyl acetate | | 142°C | (parts by mass) | | | | | | | | | | | | | |
| | Cyclohexanone | | 155°C | (parts by mass) | 60 | 60 | 60 | 14 | 56 | 60 | 60 | 60 | 60 | | 140 | | |
| Solution state* | | | | Evaluation | A | A | A | A | A | A | A | A | A | A | A | A | B |
| Curing agent (parts by mass) | | Glycidyl ether-type epoxy resin | | | 25 | 25 | | 25 | 25 | 25 | 25 | 25 | 25 | 25 | 25 | 25 | 25 |
| | | Glycidyl amine-type epoxy resin | | | 3 | 3 | | 3 | 3 | 3 | 3 | 3 | 3 | 3 | 3 | 3 | 3 |
| | | Multifunctional polyisocyanate | | | | | 7.5 | | | | | | | | | | |
| Fbt life (25°C) | | Solution viscosity at 25°C (mPa·s) | | | 100 | 103 | 280 | 98 | 87 | 204 | 486 | 105 | 158 | 42 | 894 | Gelled | Gelled |
| | | Evaluation | | | A | A | A | A | A | A | B | A | A | A | C | D | D |
| Adhesion | | Adhesion strength (N/15 mm) | | | Material fracture | Material fracture | Material fracture | Material fracture | 7.6 | Material fracture | Material fracture | Material fracture | Material fracture | Material fracture | 5.4 | 7.3 | - |
| | | Evaluation | | | A | A | A | A | B | A | A | A | A | A | D | C | D |
| Chemical resistance (electrolyte solution resistance) | | Adhesion strength (N/15 mm) | | | Material fracture | Material fracture | Material fracture | Material fracture | Material fracture | Material fracture | Material fracture | Material fracture | Material fracture | Material fracture | 60 | 7.4 | - |
| | | Evaluation | | | A | A | A | A | A | A | A | A | A | A | D | C | D |
| Re-solubility | | Resin adhering amount (g/m²) | | | 52 | 52 | 55 | 89 | 52 | 31 | 88 | 68 | 70 | 240 | 33 | 54 | - |
| | | Evaluation | | | A | A | A | B | A | A | B | B | B | D | A | A | D |

Analytical measurement and evaluation of the thus-obtained acid-modified polyolefins, main agents, and adhesive compositions were performed in the following manner.

### Measurement of Acid Value

The acid value (mgKOH/g-resin) in the present invention refers to the amount of KOH required to neutralize 1 g of acid-modified polyolefin (A), and was measured in accordance with the test method of JIS K0070 (1992). Specifically, 1 g of the acid-modified polyolefin was dissolved in 100 g of xylene adjusted to a temperature of 100°C, and then titrated with a 0.1 mol/L potassium hydroxide ethanol solution (trade name 0.1 mol/L Potassium Hydroxide Ethanolic Solution, produced by Wako Pure Chemical Industries, Ltd.) using phenolphthalein as an indicator at the same temperature. The amount of potassium hydroxide required for titration was converted into milligrams to calculate the acid value (mgKOH/g).

### Measurement of Weight Average Molecular Weight (Mw)

The weight average molecular weight in the present invention is a value measured with an Alliance e2695 gel permeation chromatograph (referred to below as "GPC"; standard substance: polystyrene resin, mobile phase: tetrahydrofuran, column: Shodex KF-806 and KF-803, column temperature: 40°C, flow rate: 1.0 ml/min, detector: photodiode array detector (wavelength: 254 nm = ultraviolet light)) produced by Nihon Waters K.K.

### Measurement of Melting Point and Heat of Fusion

The melting point and heat of fusion in the present invention are values measured with a differential scanning calorimeter (referred to below as "DSC"; Q-2000 produced by TA Instruments Japan Inc.) from the top temperature and area of the melting peak when a sample was melted by heating at a rate of 10°C/min, cooled to achieve resinification, and melted again by heating.

### Evaluation of Main Agent Solution State

The solution state of the main agents 1 to 25 was evaluated by measuring the solution viscosity at 25°C with a Brookfield viscometer TVB-10M (produced by Toki Sangyo Co., Ltd., also referred to below as "B-type viscometer").

### Evaluation Criteria

### A (practicable): less than 1000 mPa·s

### B (impracticable): 1000 mPa·s or more or the viscosity could not be measured due to gelation

### Evaluation of Re-solubility

The re-solubility refers to the properties of an adhesive composition comprising an acid-modified polyolefin (A), a curing agent (B), and an organic solvent (C), i.e., properties of dissolving again in the adhesive composition after the adhesive composition is applied to a substrate and left for a certain period of time.

### Method of Re-solubility Test

150 mL of an adhesive composition was placed in a 200-mL disposable cup, a tin test plate (produced by Nippon Test panel Co., Ltd., cut tin, thickness: 25 pm, size: 50 mm × 10 mm) whose weight was measured in advance was repeatedly immersed in the adhesive composition, and the weight of the test plate after drying at 25°C for 30 minutes was measured again. For the test plate immersion, the tin test plate was immersed for 2 seconds so that 4.5 cm from one of its ends was under the liquid surface, the entire substrate was then withdrawn from the liquid surface at 50 cm/sec and allowed to stand in the atmosphere at a temperature of 25°C for 15 seconds, and the test plate was immersed again. The series of these procedures was regarded as one cycle, and 30 cycles were carried out. The resin adhering amount is a value obtained by dividing the difference in weight of the test plate before and after immersion by the immersion area.

### Evaluation Criteria

A (particularly excellent in practical use): 55 g/m² or less
B (excellent in practical use): more than 55 g/m² and 100 g/m² or less
C (practicable) : more than 100 g/m² and 200 g/m² or less
D (impracticable): more than 200 g/m²

### Evaluation of Pot Life Properties

The pot life properties refer to the stability of a solution immediately after mixing an acid-modified polyolefin with a crosslinking agent or a curing agent, or after a specific time following mixing. Excellent pot life properties mean that the solution can be stored for a long period of time with less increase in the viscosity of the solution. Poor pot life properties mean that the solution cannot be stored for a long period of time because the viscosity of the solution increases (the solution thickens) and, in severe cases, a gelation phenomenon occurs, making it difficult to apply the solution to a substrate.

The pot life properties of an adhesive composition were evaluated by measuring the viscosity of the solution at 25°C with a B-type viscometer after storing the solution at 25°C for 24 hours.

Tables 3 and 4 show the evaluation results.

### Evaluation Criteria

A (particularly excellent in practical use): less than 300 mPa·s
B (excellent in practical use): 300 mPa·s or more and less than 500 mPa·s
C (practicable): 500 mPa·s or more and less than 1000 mPa·s
D (impracticable): 1000 mPa·s or more or the viscosity could not be measured due to gelation

### Production of Laminate Comprising Metal Substrate and Polyolefin Resin Substrate

Aluminum foil (produced by Sumikei Aluminum Foil Co., Ltd., 8079-0, thickness: 40 µm) was used as a metal substrate, and a cast polypropylene film (PYLEN (registered trademark) Film-CT, produced by Toyobo Co., Ltd., thickness: 40 um) (also referred to below as "CPP") was used as a polyolefin resin substrate.

The adhesive compositions obtained in Examples 1 to 22 and Comparative Examples 1 to 4 were applied to the metal substrate with a bar coater so that the film thickness of the adhesive layer after drying was 3 pm. The coating surface was dried with a hot air dryer at 100°C for 5 minutes to obtain the metal substrate on which an adhesive layer having a film thickness of 3 µm was laminated. The polyolefin resin substrate was bonded to the surface of the adhesive layer at a laminating temperature of 80°C, 0.3 MPa, and 1 m/min, using a tabletop test laminator (SA-1010-S) produced by Tester Sangyo Co., Ltd., followed by aging at 25°C and 50% RH for 36 hours, thereby obtaining a laminate.

The thus-obtained laminate was evaluated by the following method.

### Evaluation of Adhesion

The laminate was cut into a size of 100 mm × 15 mm, and the adhesion was evaluated by the T-peel test using the following criteria. Tables 3 and 4 show the evaluation results.

### T-peel Test

The test was performed by measuring the peel strength at a tensile rate of 50 mm/min at 25°C in accordance with the test method of ASTM-D1876-61 by using a Tensilon RTM-100 produced by Orientec Corporation. The average of five test values was defined as the peel strength (N/cm) between a metal substrate and a polyolefin resin substrate.

### Evaluation Criteria

A (particularly excellent in practical use): 8.0 N/cm or more or the CPP underwent material fracture (also simply referred to below as "material fracture"); the term "material fracture" refers to the breakage of a metal substrate or CPP without the occurrence of peeling at the interface of the metal substrate and CPP.
B (excellent in practical use): 7.5 N/cm or more and less than 8.0 N/cm
C (practicable): 7.0 N/cm or more and less than 7.5 N/cm
D (impracticable): less than 7.0 N/cm

### Evaluation of Chemical Resistance

The chemical resistance (also referred to below as "electrolyte solution resistance") was evaluated by an electrolyte solution test to examine the usability as a packaging material for LiBs. The laminate was cut into a size of 100 mm × 15 mm, and immersed at 85°C in an electrolyte solution (solution obtained by adding 13 g of lithium hexafluorophosphate to 100 g of ethylene carbonate/diethyl carbonate/dimethyl carbonate at a volume ratio of 1/1/1) for 1 day. Thereafter, the laminate was removed, washed with ion-exchanged water, wiped off with a paper wipe, sufficiently dried, and cut into a size of 100 mm × 15 mm. The chemical resistance was then evaluated by the T-peel test using the following criteria. Tables 3 and 4 show the evaluation results.

### Evaluation Criteria

A (particularly excellent in practical use): 8.0 N/cm or more or material fracture
B (excellent in practical use): 7.5 N/cm or more and less than 8.0 N/cm
C (practicable): 7.0 N/cm or more and less than 7.5 N/cm
D (impracticable): less than 7.0 N/cm

### Industrial Applicability

The adhesive composition of the present invention, which comprises an acid-modified polyolefin, a curing agent, and an organic solvent, maintains excellent pot life properties without the mixed liquid becoming solidified or deposited even in long-run production, and can achieve both excellent electrolyte solution resistance and excellent adhesion to a metal substrate and a polyolefin resin substrate at the same time. Thus, a laminate of a polyolefin resin substrate and a metal substrate formed using the adhesive composition of the present invention can be used for a wide variety of fields such as not only for exterior panels of household electrical appliances, furniture materials, and interior building components, but also packaging materials (pouches) for lithium batteries used in personal computers, mobile phones, video cameras, etc.

## Claims

1. An adhesive composition comprising an acid-modified polyolefin (A), a curing agent (B), and an organic solvent (C), wherein the total amount of adhering matter of the acid-modified polyolefin (A), the curing agent (B), and a reaction product of the acid-modified polyolefin (A) and the curing agent (B) after a re-dissolution test is 200 g/m² or less,
wherein the organic solvent (C) comprises an organic solvent (C3), and comprises two or more organic solvents selected from the group consisting of an organic solvent (C1), an organic solvent (C2), and an organic solvent (C4),
the organic solvent (C1) being at least one organic solvent selected from the group consisting of aliphatic hydrocarbons and alicyclic hydrocarbons, and having a boiling point of lower than 110°C,
the organic solvent (C2) being at least one organic solvent selected from the group consisting of alcohol-based solvents, ketone-based solvents, ester-based solvents, and glycol ether-based solvents, and having a boiling point of lower than 110°C,
the organic solvent (C3) being at least one organic solvent selected from the group consisting of aliphatic hydrocarbons and alicyclic hydrocarbons, and having a boiling point of 110°C or higher, and
the organic solvent (C4) being at least one organic solvent selected from the group consisting of alcohol-based solvents, ketone-based solvents, ester-based solvents, and glycol ether-based solvents, and having a boiling point of 110°C or higher,
when the organic solvent (C) is a combination (i) of (C3), (C1), and (C2), and when the content of the organic solvent (C3) is set to 100 parts by mass, the content of (C1) is 20 parts by mass or more and 260 parts by mass or less, and the content of (C2) is 5 parts by mass or more and 300 parts by mass or less,
when the organic solvent (C) is a combination (ii) of (C3), (C1), and (C4), and when the content of the organic solvent (C3) is set to 100 parts by mass, the content of (C1) is 20 parts by mass or more and 260 parts by mass or less, and the content of (C4) is 5 parts by mass or more and 300 parts by mass or less,
when the organic solvent (C) is a combination (iii) of (C3), (C2), and (C4), and when the content of the organic solvent (C3) is set to 100 parts by mass, the content of (C2) is 5 parts by mass or more and 300 parts by mass or less, and the content of (C4) is 5 parts by mass or more and 300 parts by mass or less,
when the organic solvent (C) is a combination (iv) of (C3), (C1), (C2), and (C4), and when the content of the organic solvent (C3) is set to 100 parts by mass, the content of (C1) is 20 parts by mass or more and 2000 parts by mass or less, the content of (C2) is 2 parts by mass or more and 1000 parts by mass or less, and the content of (C4) is 1 parts by mass or more and 300 parts by mass or less,
wherein the re-dissolution test is carried out as set out in the description.

2. The adhesive composition according to claim 1, wherein the curing agent (B) is an epoxy resin or an isocyanate resin.

3. The adhesive composition according to claim 1 or 2, comprising 0.5 to 40 parts by mass of the curing agent (B) and 80 to 2000 parts by mass of the organic solvent (C), based on 100 parts by mass of the acid-modified polyolefin (A).

4. Use of the adhesive composition according to any one of claims 1 to 3for bonding between a polyolefin resin substrate and a metal substrate.

5. A laminate of a polyolefin resin substrate and a metal substrate bonded with the adhesive composition of any one of claims 1 to 3.

6. A packaging material for a lithium-ion battery, comprising the laminate of claim 5 as a constituent member.

## Patentansprüche

1. Eine Klebstoffzusammensetzung, umfassend ein säuremodifiziertes Polyolefin (A), ein Härtungsmittel (B) und ein organisches Lösungsmittel (C), wobei die Gesamtmenge der anhaftenden Substanz des säuremodifizierten Polyolefins (A), des Härtungsmittels (B) und eines Reaktionsprodukts des säuremodifizierten Polyolefins (A) und des Härtungsmittels (B) nach einem Rücklösungstest 200 g/m² oder weniger beträgt,
wobei das organische Lösungsmittel (C) ein organisches Lösungsmittel (C3) umfasst und zwei oder mehr organische Lösungsmittel, ausgewählt aus der Gruppe bestehend aus einem organischen Lösungsmittel (C1), einem organischen Lösungsmittel (C2) und einem organischen Lösungsmittel (C4), umfasst,
wobei das organische Lösungsmittel (C1) mindestens ein organisches Lösungsmittel ist, das aus der Gruppe bestehend aus aliphatischen Kohlenwasserstoffen und alicyclischen Kohlenwasserstoffen ausgewählt ist und einen Siedepunkt von weniger als 110°C aufweist,
wobei das organische Lösungsmittel (C2) mindestens ein organisches Lösungsmittel ist, das aus der Gruppe bestehend aus Lösungsmitteln auf Alkoholbasis, Lösungsmitteln auf Ketonbasis, Lösungsmitteln auf Esterbasis und Lösungsmitteln auf Glycoletherbasis ausgewählt ist und einen Siedepunkt von weniger als 110°C aufweist,
wobei das organische Lösungsmittel (C3) mindestens ein organisches Lösungsmittel ist, das aus der Gruppe bestehend aus aliphatischen Kohlenwasserstoffen und alicyclischen Kohlenwasserstoffen ausgewählt ist und einen Siedepunkt von 110°C oder höher aufweist und
wobei das organische Lösungsmittel (C4) mindestens ein organisches Lösungsmittel ist, das aus der Gruppe bestehend aus Lösungsmitteln auf Alkoholbasis, Lösungsmitteln auf Ketonbasis, Lösungsmitteln auf Esterbasis und Lösungsmitteln auf Glycoletherbasis ausgewählt ist und einen Siedepunkt von 110°C oder höher aufweist,
wenn das organische Lösungsmittel (C) eine Kombination (i) von (C3), (C1) und (C2) ist und wenn der Gehalt des organischen Lösungsmittels (C3) auf 100 Massenteile eingestellt ist, der Gehalt an (C1) 20 Massenteile oder mehr und 260 Massenteile oder weniger beträgt und der Gehalt an (C2) 5 Massenteile oder mehr und 300 Massenteile oder weniger beträgt,
wenn das organische Lösungsmittel (C) eine Kombination (ii) von (C3), (C1) und (C4) ist und wenn der Gehalt des organischen Lösungsmittels (C3) auf 100 Massenteile eingestellt ist, der Gehalt an (C1) 20 Massenteile oder mehr und 260 Massenteile oder weniger beträgt und der Gehalt an (C4) 5 Massenteile oder mehr und 300 Massenteile oder weniger beträgt,
wenn das organische Lösungsmittel (C) eine Kombination (iii) von (C3), (C2) und (C4) ist, und wenn der Gehalt des organischen Lösungsmittels (C3) auf 100 Massenteile eingestellt ist, der Gehalt an (C2) 5 Massenteile oder mehr und 300 Massenteile oder weniger beträgt, und der Gehalt an (C4) 5 Massenteile oder mehr und 300 Massenteile oder weniger beträgt,
wenn das organische Lösungsmittel (C) eine Kombination (iv) von (C3), (C1), (C2) und (C4) ist und wenn der Gehalt des organischen Lösungsmittels (C3) auf 100 Massenteile eingestellt ist, der Gehalt an (C1) 20 Massenteile oder mehr und 2000 Massenteile oder weniger beträgt, der Gehalt an (C2) 2 Massenteile oder mehr und 1000 Massenteile oder weniger beträgt und der Gehalt an (C4) 1 Massenteil oder mehr und 300 Massenteile oder weniger beträgt,
wobei der Rücklösungstest wie in der Beschreibung angegeben durchgeführt wird.

2. Die Klebstoffzusammensetzung nach Anspruch 1, wobei das Härtungsmittel (B) ein Epoxidharz oder ein Isocyanatharz ist.

3. Die Klebstoffzusammensetzung nach Anspruch 1 oder 2, umfassend 0,5 bis 40 Massenteile des Härtungsmittels (B) und 80 bis 2000 Massenteile des organischen Lösungsmittels (C), bezogen auf 100 Massenteile des säuremodifizierten Polyolefins (A).

4. Verwendung der Klebstoffzusammensetzung nach einem der Ansprüche 1 bis 3 zum Verkleben zwischen einem Polyolefinharzsubstrat und einem Metallsubstrat.

5. Ein Laminat aus einem Polyolefinharzsubstrat und einem Metallsubstrat, das mit der Klebstoffzusammensetzung nach einem der Ansprüche 1 bis 3 verklebt ist.

6. Ein Verpackungsmaterial für eine Lithium-Ionen-Batterie, umfassend das Laminat nach Anspruch 5 als ein konstituierendes Element.

## Revendications

1. Composition adhésive comprenant une polyoléfine modifiée par un acide (A), un agent de durcissement (B), et un solvant organique (C), dans laquelle la quantité totale de matière adhérente de la polyoléfine modifiée par un acide (A), de l'agent de durcissement (B), et d'un produit de réaction de la polyoléfine modifiée par un acide (A) et de l'agent de durcissement (B) après un test de redissolution est de 200 g/m² ou moins,
dans laquelle le solvant organique (C) comprend un solvant organique (C3), et comprend deux solvants organiques ou plus sélectionnés dans le groupe consistant en un solvant organique (C1), un solvant organique (C2), et un solvant organique (C4),
le solvant organique (C1) étant au moins un solvant organique sélectionné dans le groupe consistant en les hydrocarbures aliphatiques et les hydrocarbures alicycliques, et ayant un point d'ébullition inférieur à 110 °C,
le solvant organique (C2) étant au moins un solvant organique sélectionné dans le groupe consistant en les solvants à base d'alcool, les solvants à base de cétone, les solvants à base d'ester, et les solvants à base d'éther de glycol, et ayant un point d'ébullition inférieur à 110 °C,
le solvant organique (C3) étant au moins un solvant organique sélectionné dans le groupe consistant en les hydrocarbures aliphatiques et les hydrocarbures alicycliques, et ayant un point d'ébullition de 110 °C ou plus, et
le solvant organique (C4) étant au moins un solvant organique sélectionné dans le groupe consistant en les solvants à base d'alcool, les solvants à base de cétone, les solvants à base d'ester, et les solvants à base d'éther de glycol, et ayant un point d'ébullition de 110 °C ou plus,
quand le solvant organique (C) est une combinaison (i) de (C3), (C1) et (C2), et quand la teneur en solvant organique (C3) est fixée à 100 parties en masse, la teneur en (C1) est de 20 parties en masse ou plus et de 260 parties en masse ou moins, et la teneur en (C2) est de 5 parties en masse ou plus et de 300 parties en masse ou moins,
quand le solvant organique (C) est une combinaison (ii) de (C3), (C1) et (C4), et quand la teneur en solvant organique (C3) est fixée à 100 parties en masse, la teneur en (C1) est de 20 parties en masse ou plus et de 260 parties en masse ou moins, et la teneur en (C4) est de 5 parties en masse ou plus et de 300 parties en masse ou moins,
quand le solvant organique (C) est une combinaison (iii) de (C3), (C2) et (C4), et quand la teneur en solvant organique (C3) est fixée à 100 parties en masse, la teneur en (C2) est de 5 parties en masse ou plus et de 300 parties en masse ou moins, et la teneur en (C4) est de 5 parties en masse ou plus et de 300 parties en masse ou moins
quand le solvant organique (C) est une combinaison (iv) de (C3), (C1), (C2) et (C4), et quand la teneur en solvant organique (C3) est fixée à 100 parties en masse, la teneur en (C1) est de 20 parties en masse ou plus et de 2 000 parties en masse ou moins, la teneur en (C2) est de 2 parties en masse ou plus et de 1 000 parties en masse ou moins, et la teneur en (C4) est 1 partie en masse ou plus et de 300 parties en masse ou moins,
dans laquelle le test de redissolution est effectué comme indiqué dans la description.

2. Composition adhésive selon la revendication 1, dans laquelle l'agent de durcissement (B) est une résine époxy ou une résine isocyanate.

3. Composition adhésive selon la revendication 1 ou 2, comprenant 0,5 à 40 parties en masse de l'agent de durcissement (B) et 80 à 2 000 parties en masse du solvant organique (C), sur la base de 100 parties en masse de la polyoléfine (A) modifiée par un acide.

4. Utilisation de la composition adhésive selon l'une quelconque des revendications 1 à 3 pour la liaison entre un substrat en résine de polyoléfine et un substrat métallique.

5. Stratifié d'un substrat en résine de polyoléfine et d'un substrat métallique liés avec la composition adhésive selon l'une quelconque des revendications 1 à 3.

6. Matériau d'emballage pour une batterie au lithium-ion, comprenant le stratifié selon la revendication 5 en tant qu'élément constitutif.
